# EUROPÄISCHE PATENTANMELDUNG

(11) **EP 1 052 203 A2**
(43) Veröffentlichungstag der Anmeldung: **15.11.2000**
(21) Anmeldenummer: 00109292.3
(22) Anmeldetag: 29.04.2000
(51) Int. Cl.: B65G 53/30

(54) **Verfahren und Vorrichtung zur hydraulischen Förderung von Schüttgut**

(30) Priorität: 07.05.1999 DE 19921162
(71) Anmelder: Waeschle GmbH, 88250 Weingarten (DE)
(72) Erfinder: Stark, Bernhard, Dr., 88273 Fronreute (DE)
(74) Vertreter: Hemmelmann, Klaus

(57) **Zusammenfassung**

Bei einem Verfahren zur hydraulischen Förderung von Schüttgut in Förderleitungen (9, 9') von Aufgabeorten (2, 2') zu Zielorten (3, 3'), bei dem das Schüttgut am Aufgabeort mit der Förderflüssigkeit vermischt und die Dispersion aus Schüttgut und Förderflüssigkeit mit Hilfe einer jeder Förderleitung zugeordneten ersten Pumpe (10, 10') zum Zielort gepumpt wird, können die Förderleitungen bei Ausfall der ersten Pumpe mit Ersatzpumpen verbunden werden. Dabei wird eine Ersatzpumpe (21) wahlweise mit einer von mehreren Förderleitungen verbunden, wenn die der entsprechenden Förderleitung zugeordnete erste Pumpe (10, 10') außer Funktion tritt.

## Beschreibung

Die Erfindung betrifft ein Verfahren und eine Vorrichtung zur hydraulischen Förderung von Schüttgut in Förderleitungen von Aufgabeorten zu Zielorten, bei dem das Schüttgut am Aufgabeort mit der Förderflüssigkeit vermischt und die Dispersion aus Schüttgut und Förderflüssigkeit mit Hilfe einer jeder Förderleitung zugeordneten ersten Pumpe zum Zielort gepumpt wird, wobei die Förderleitungen mit Ersatzpumpen verbunden werden können.

Es ist allgemein bekannt, Schüttgut mit einer Flüssigkeit zu einer Dispersion zu vermischen und diese Dispersion mittels einer Pumpe hydraulisch durch eine Förderleitung vom Aufgabeort zu einem Zielort zu pumpen.

Die Pumpe kann dabei zwischen Aufgabe- und Zielort angeordnet sein, so daß sie von der Dispersion durchströmt wird. Dieses Vorgehen wird üblicherweise gewählt, wenn die Dispersion in einem Rührbehälter zubereitet wird.

Alternativ ist es möglich, die Pumpe vor dem Aufgabeort oder hinter dem Zielort in den Leitungen für die Zu- oder Abfuhr der Förderflüssigkeit anzuordnen, so daß sie nicht mit den Schüttgutpartikeln in Berührung kommt. In dieser Weise wird beispielsweise bei der Unterwassergranulierung verfahren, bei der eine vor dem Granulierwerkzeug befindliche Pumpe den hydraulischen Kühl- und Förderstrom bereitstellt.

In allen Fällen muß eine kurzfristig einsatzbereite Ersatzpumpe für den Fall vorgesehen sein, daß die erste Pumpe infolge einer Betriebsstörung ausfällt. In der Regel wird parallel zu jeder ersten Pumpe eine Ersatzpumpe angeordnet, die durch das Öffnen von Ventilen in der Parallelleitung mit der Förderleitung verbunden werden kann.

Dieses Vorgehen ist jedoch mit einem hohen Investitionsaufwand verbunden, da jeder ersten Pumpe eine im wesentlichen in Ruhe befindliche Ersatzpumpe zugeordnet wird. Dieser Nachteil ist insbesondere dann bedeutsam, wenn eine Vielzahl von Förderleitungen in räumlicher Nähe verlaufen.

### Aufgabe

Der vorliegenden Erfindung liegt die Aufgabe zugrunde, den Investitionsaufwand bei der Errichtung einer Anlage mit mehreren hydraulischen Förderleitungen zu verringern.

### Lösung

Die Aufgabe wird erfindungsgemäß dadurch gelöst, daß eine Ersatzpumpe wahlweise mit einer von mehreren Förderleitungen verbunden wird, wenn die der entsprechenden Förderleitung zugeordnete erste Pumpe außer Funktion tritt.

Die Ersatzpumpe kann über ihre Funktion als Reserve bei Funktionsstörungen der ersten Pumpe hinaus bevorzugt Zusatzfunktionen übernehmen.

So ist es denkbar, die erste Pumpe insbesondere in Hinsicht auf eine produktschonende Förderung auszulegen, während die Ersatzpumpe einen besonders hohen Förderdruck bereitstellt, der zum Leerfahren der Förderleitung mit reiner Förderflüssigkeit vorteilhaft ist. In diesem Fall wird in Kauf genommen, daß die Ersatzpumpe beim seltenen ersatzweisen Pumpen der Schüttgutdispersion einem erhöhten Verschleiß unterliegt.

Damit beim Leerfahren eine Rückströmung durch die erste Pumpe verhindert wird, kann der Strömungsdurchgang durch diese in einer bevorzugten Ausführung der Erfindung unterbrochen werden.

### Figuren

Die Figuren stellen beispielhaft und schematische verschiedene Ausführungen der Erfindung dar.

Es zeigen:
- Fig. 1: eine Vorrichtung zur Durchführung des erfindungsgemäßen Verfahren im regulären Förderbetrieb
- Fig. 2: den Einsatz der Ersatzpumpe zum Betreiben einer ersten Förderleitung
- Fig. 3: den Einsatz der Ersatzpumpe zum Betreiben einer zweiten Förderleitung

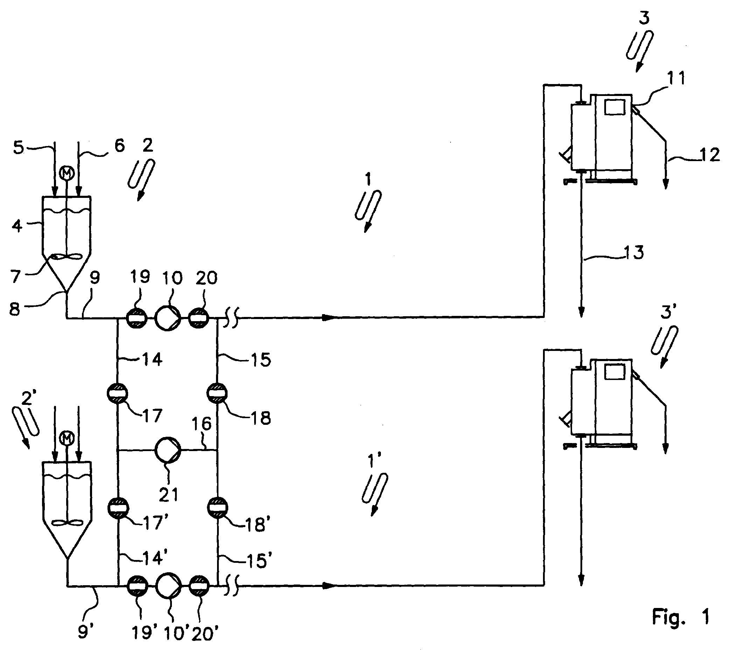

Die in Figur 1 dargestellte Förderanlage umfaßt zwei parallele Förderstränge 1,1', die jeweils zur hydraulischen Förderung von Schüttgut von einem Aufgabeort 2, 2' zu einem Zielort 3, 3' dienen. Die grundsätzliche Funktionsweise der Förderanlage wird am Beispiel des oberen Förderstrangs 1 beschrieben.

Als Aufgabeort 2 dient im Ausführungsbeispiel ein Rührbehälter 4, der im gewünschten, einstellbaren Mengenverhältnis über eine erste Leitung 5 mit Schüttgut und über eine zweite Leitung 6 mit Förderflüssigkeit beschickt wird.

Im Rührbehälter 4 werden Schüttgut und Förderflüssigkeit mittels eines Rührers 7 intensiv vermischt. Die Dispersion kann über den bodenseitigen Auslaß 8 in eine Förderleitung 9 eintreten und wird von einer Pumpe 10 zum Zielort 3 gepumpt. Die Pumpe 10 ist im Ausführungsbeispiel als Kreiselpumpe ausgeführt, welche die Dispersion mittels eines Freistromrads fördert. Eine derartig ausgerüstete Pumpe kann zwar nur einen verringerten Förderdruck erzeugen, reduziert aber den Verschleiß durch zwischen Laufrad und Gehäuse verklemmte Schüttgutpartikel.

Der Zielort 3 umfaßt einen Trockner 11, in dem mit Hilfe eines Siebs eine Vorabscheidung von Schüttgut und Förderflüssigkeit erfolgt und das Schüttgut nachfolgend getrocknet wird. Das Schüttgut wird über eine Leitung 12 aus dem Trockner 11 ausgetragen, zum Beispiel in einen Lagersilo oder eine Verpackungsanlage, während die abgeschiedene Förderflüssigkeit über eine Leitung 13 austritt. Die Leitung 13 kann beispielsweise mit der Leitung 5 für die Zufuhr von Förderflüssigkeit in den Rührbehälter verbunden werden, so daß die Förderflüssigkeit in einem geschlossenen Kreis geführt wird, in dem nur die Verdunstungsverluste des Trockners ersetzt werden müssen.

Der zweite Förderstrang 1' ist entsprechend aufgebaut.

Die erste Förderleitung 9 und die zweite Förderleitung 9' sind über parallele Zweigleitungen 14, 14' beziehungsweise 15, 15' mit einer Verbindungsleitung 16 verbindbar. Über in den Zweigleitungen 14, 14', 15, 15' angeordnete Absperrventile 17, 17' und 18, 18' kann der Durchfluß durch jede Zweigleitung 14, 14', 15, 15' unterbrochen werden. Durch weitere Absperrventile 19, 19', 20, 20', die in der Förderleitung 9, 9' zwischen den Zweigleitungen 14, 15 sowie 14', 15' angeordnet sind, kann darüber hinaus der Strömungsdurchgang durch die Pumpen 10, 10' verschlossen werden.

In der Verbindungsleitung 16 befindet sich eine Ersatzpumpe 21, die im Ausführungsbeispiel als Kreiselpumpe mit einem Kanalrad ausgeführt ist. Eine solche Pumpe erzeugt einen hohen Förderdruck, unterliegt aber bei der Förderung einer Schüttgutdispersion einem erhöhten Verschleiß. Selbstverständlich ist es auch möglich, eine Ersatzpumpe 21 zu verwenden, die in ihrer Ausführung der ersten Pumpe 10, 10' entspricht.

In der Fördersituation nach Figur 1 sind die Absperrventile 17, 17', 18, 18' geschlossen, so daß die Dispersion bei geöffneten Absperrventilen 19, 19', 20, 20', jeweils von den Pumpen 10, 10' durch die zugeordnete Förderleitung 9, 9' gepumpt wird. Diese Abbildung stellt den normalen, störungsfreien Förderzustand dar.

Tritt in der Pumpe 10 eine Betriebsstörung auf oder sind an ihr Instantsetzungsarbeiten durchzuführen, wird diese nach Öffnen der Absperrventile 17 und 18 über die Zweigleitungen 14 und 15 sowie die Verbindungsleitung 16 überbrückt. Zeitgleich wird die Ersatzpumpe 21 eingeschaltet, die ohne nachhaltige Unterbrechung die Förderung der Dispersion vom Aufgabeort 2 zum Zielort 3 übernimmt. Die Pumpe 10 kann durch Schließen der Absperrventile 19, 20 vollständig von der Förderleitung 9 abgekoppelt und demontiert werden.

Ist die Störung an der Pumpe 10 behoben oder sind die Wartungsarbeiten beendet, werden die Absperrventile in die Stellung nach Figur 1 zurückgeschaltet.

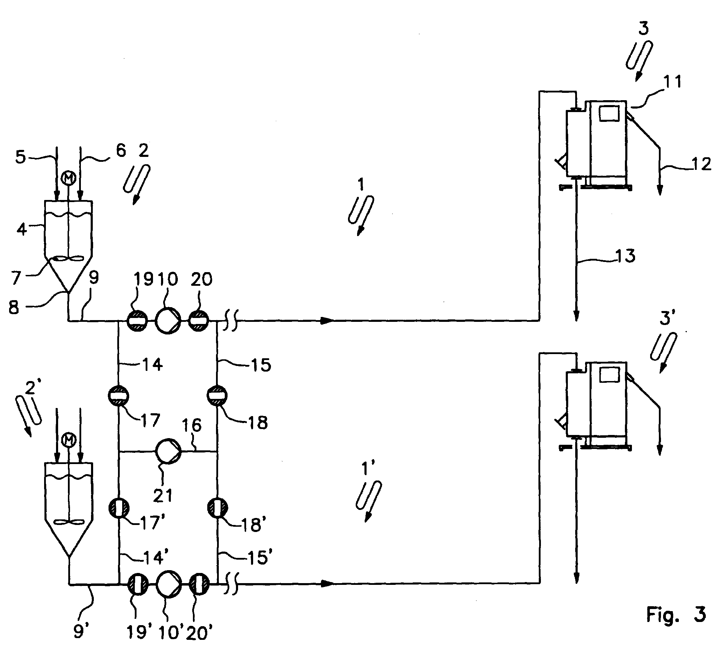

Tritt an der Pumpe 10' ein Schaden auf, werden die Absperrventile 17', 18' geöffnet und die Absperrventile 19', 20' geschlossen, so daß die Ersatzpumpe 21 die Förderung der Schüttgutdispersion in der Förderleitung 9' übernimmt, wie in Figur 3 dargestellt.

Es ist also nur eine Ersatzpumpe erforderlich, um die Funktionsfähigkeit mehrerer Förderstränge 1, 1' beim Ausfall einer der Pumpen 10, 10' zu gewährleisten. Die Anwendung ist selbstverständlich nicht auf zwei Förderstränge beschränkt, sondern kann auch bei einer größeren Anzahl erfolgen, sofern die räumliche Nähe der Förderstränge dieses sinnvoll erscheinen läßt.

Das erfindungsgemäße Vorgehen ist jedoch nicht nur bei Störungen der Pumpen 10, 10' vorteilhaft, sondern kann auch beim Leerfahren der Förderleitungen 9, 9' mit Erfolg eingesetzt werden, insbesondere dann, wenn sich die Pumpen 10, 10' und die Ersatzpumpe 21 in ihrer Auslegung in der zuvor beschriebenen Weise unterscheiden.

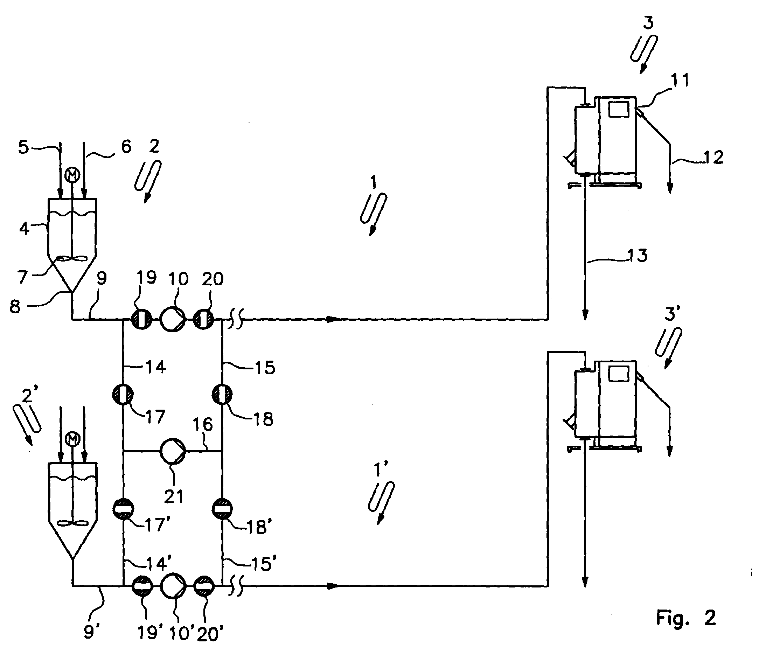

Soll beispielsweise die Förderleitung 9 leergefahren, also von Schüttgutresten befreit werden, wird in der Fördersituation nach Figur 1 die Zufuhr von Schüttgut in den Rührbehälter 4 unterbrochen und die Zufuhr an Förderflüssigkeit erhöht, so daß sich der Anteil an Schüttgut in der Dispersion sukzessive verringert. Wird die Pumpe 10 im wesentlichen nur noch von Förderflüssigkeit durchströmt, sind die Absperrventile in die Stellung nach Figur 2 umzuschalten. Dabei tritt die Ersatzpumpe 21 in Funktion und spült die Förderleitung 9 mit hohem Druck, so daß Schüttgutpartikel in kurzer Zeit rückstandslos ausgetragen werden.

Nach Beendigung der Leerfahrens kann entsprechend Figur 1 von der Pumpe 10 ein anderes Schüttgut zum Zielort 3 gepumpt werden.

Die Ersatzpumpe 21 kann in der Situation nach Figur 3 auch zum Leerfahren der Förderleitung 9' dienen.

Die vorliegende Erfindung ist selbstverständlich nicht auf das Ausführungsbeispiel beschränkt. Vielmehr kann sie beispielsweise auch bei der Schüttgutaufgabe mittels eines Granulierwerkzeugs vorteilhaft eingesetzt werden. Weiterhin sind nicht nur Kreiselpumpen, sondern auch andere Pumpenarten wie Kolbenpumpen verwendbar.

### Bezugszeichenliste

- 1: Förderstrang
- 2: Aufgabeort
- 3: Zielort
- 4: Rührbehälter
- 5, 6: Leitung
- 7: Rührer
- 8: Auslaß
- 9: Förderleitung
- 10: Pumpe
- 11: Trockner
- 12, 13: Leitung
- 14, 15: Zweigleitung
- 16: Verbindungsleitung
- 17, 18, 19, 20: Absperrventile
- 21: Ersatzpumpe

## Patentansprüche

1. Verfahren zur hydraulischen Förderung von Schüttgut in Förderleitungen (9, 9') von Aufgabeorten (2, 2') zu Zielorten (3, 3'), bei dem das Schüttgut am Aufgabeort mit der Förderflüssigkeit vermischt und die Dispersion aus Schüttgut und Förderflüssigkeit mit Hilfe einer jeder Förderleitung zugeordneten ersten Pumpe (10, 10') zum Zielort gepumpt wird, wobei die Förderleitungen mit Ersatzpumpen verbunden werden können, dadurch gekennzeichnet, daß eine Ersatzpumpe (21) wahlweise mit einer von mehreren Förderleitungen (9, 9') verbunden wird, wenn die der entsprechenden Förderleitung zugeordnete erste Pumpe (10, 10') außer Funktion tritt.

2. Verfahren nach Anspruch 1, dadurch gekennzeichnet, daß die Ersatzpumpe (21) zum Leerfahren der Förderleitung (9, 9') mit derselben verbunden wird.

3. Verfahren nach Anspruch 2, dadurch gekennzeichnet, daß der Strömungsdurchgang durch die erste Pumpe (10, 10') beim Leerfahren unterbrochen wird.

4. Vorrichtung zur hydraulischen Förderung von Schüttgut, umfassend Förderleitungen (9, 9') mit ersten Pumpen (10, 10') für den Transport von Dispersionen aus Schüttgut und Förderflüssigkeit von Aufgabeorten (2, 2') zu Zielorten (3, 3'), sowie mit den Förderleitungen verbindbare Ersatzpumpen, dadurch gekennzeichnet, daß jede Ersatzpumpe (21) mit mehreren Förderleitungen (9, 9') verbindbar ist.

5. Vorrichtung nach Anspruch 4, dadurch gekennzeichnet, daß die Ersatzpumpe (21) geeignet ist, in der Förderleitung (9, 9') einen höheren hydraulischen Druck als die erste Pumpe (10, 10') aufzubauen.

6. Vorrichtung nach Anspruch 5, dadurch gekennzeichnet, daß die erste Pumpe (10, 10') als Kreiselpumpe mit einem Freistromrad ausgeführt ist.

7. Vorrichtung nach Anspruch 5 oder 6 , dadurch gekennzeichnet, daß die Ersatzpumpe (21) als Kreiselpumpe mit einem Kanalrad ausgeführt ist.

8. Vorrichtung nach einem der Ansprüche 4 bis 7, dadurch gekennzeichnet, daß der Strömungsdurchgang durch die Pumpen (10, 10') durch mindestens ein Absperrventil (19, 19') verschließbar ist.

9. Vorrichtung nach Anspruch 8, dadurch gekennzeichnet, daß die Pumpen (10, 10') durch jeweils stromauf und stromab der Pumpen angeordnete Absperrventile (19, 20, 19', 20') von der Förderleitung (9, 9') entkoppelbar sind.
